# EUROPEAN PATENT SPECIFICATION

(11) **EP 1 745 910 B1**
(45) Date of publication and mention of the grant of the patent: **08.07.2009**
(21) Application number: 06117465.2
(22) Date of filing: 19.07.2006
(51) Int. Cl.: B29C 45/03, B29C 45/16

(54) **Integrated injection-moulding system for the production of articles manufactured with synthetic materials**
Integrierte Spritzgießeinheit zur Herstellung von Kunststoffgegenständen
Unité de moulage par injection integrée pour produire des objets en matière plastique

(30) Priority: 21.07.2005 CH 12142005
(43) Date of publication of application: 24.01.2007
(73) Proprietor: Patents Exploitation Company B.V., 1082 MD Amsterdam (NL)
(72) Inventor: Vasquez Pinto, José Gabriel, Oficina 3 P.O. Box 823-2400 Panama (PA)
(74) Representative: Gerbino, Angelo

(56) References cited:
- WO-A-20/05018905
- JP-A- 2 178 012
- JP-A- 2003 053 770
- US-A1- 2002 155 187
- US-A1- 2004 051 195

## Description

The present invention relates to the production by means of injection-moulding of articles consisting of a component (henceforth called a base component) manufactured with a synthetic material which has, mounted thereon in predetermined positions, one or more other parts (henceforth called additional parts in that, usually, they are of much smaller size and/or weight) manufactured with a synthetic material which may also be different from that with which the said component is made and/or have different characteristics, but is compatible.

More specifically, the present invention relates to an injection-moulding system having the features disclosed in the preamble of claim 1. A known system of this kind is disclosed in JP-A-2003 053 770.

In the context of this patent, an "article" is understood as meaning a product ready for use, but not necessarily a finished product, for example structural subassemblies of motor vehicles such as those described in EP-A-370342 and 658470. Moreover, an injection unit is understood as meaning a device inside which synthetic material is melted.

The technology used to produce this type of article is overinjection, which requires a plurality of nozzles incorporated inside a mould and arranged opposite the different additional parts.

Overinjection often takes place immediately after manufacture of the base component, obviously after a certain number of parts which form the cavity of the mould have been extracted or arranged in a different configuration (see, for example, WO-A-01 41996) so as to make available the volume which must be filled by the second synthetic material. The second injection unit may also be fixed in a sliding manner outside the mould (see, for example, EP-A-1 148 984) which may therefore have smaller dimensions, this being related to the lesser weight of the additional parts compared to the base component.

It is also possible to perform the overinjection with a second mould and a second injection unit in addition to that by means of which the base component is formed.

In all the embodiments known by the Applicant, however, the injection unit forms part of the press associated with the mould and therefore the apparatus used comprises at least one hot chamber for transferring the second melted synthetic material with which the additional parts are made from the injection unit to the various nozzles - see, for example, the patent US-A-6 355 197.

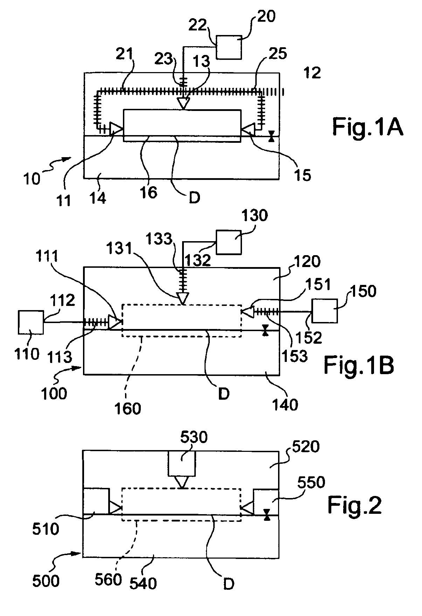

In order to facilitate comparison with the invention, the accompanying Figs. 1A and 1B show schematically two types of apparatus according to the state of the art, used for overinjecting three additional parts, in a corresponding number of positions spaced from each other, onto a base component.

The overinjection apparatus according to the state of the art which is shown schematically in Fig. 1A includes a mould, denoted overall by 10, and an injection unit 20 which, as already mentioned hereinabove, forms part of a press (not shown) which holds the mould.

The mould 10 comprises two parts 12 and 14 which are movable relative to each other and define a cavity 16. A base component D, which is formed in another press, using another press and another mould (not shown), is loaded into said cavity so as to perform the sole overinjection of three additional parts in three different positions of the base component (for greater clarity, the base component and the additional parts are not shown). Alternatively, the moulding of a base component (obviously using a special injection unit) and, after modification of the cavity, as already mentioned hereinabove, the subsequent overinjection of three different additional parts are performed in the cavity of the mould 10 (which in this case will have a variable configuration). In both cases, the synthetic material with which the three additional parts are made is the same for the obvious reason that a single injection unit forms part of the overinjection apparatus. Obviously, this material is the same as, or at least compatible with, that from which the base component D is made.

In addition to the mould 10 and the injection unit 20, the apparatus according to Fig. 1 comprises three injection nozzles 11, 13 and 15 which are housed inside the mould 10, more precisely inside the part 12. The upstream end of the nozzles are connected with the outlet 22 of the injection unit 20 by means of the three branches 21, 23 and 25 of a hot chamber. The melted synthetic material flows along said branches as far as the nozzles, the downstream ends of which are arranged along the contour of the cavity 16 of the mould 10 in three positions of the base component D where overinjection is performed.

The type of overinjection apparatus according to Fig. 1B, which also belongs to the state of the art, is used when the additional parts are made with different synthetic materials, even though these materials are obviously compatible with the material from which the base component is made. A mould 100 comprising two parts 120 and 140 which are movable relative to each other and define a cavity 160, as well as three injection nozzles 111, 131 and 151, also form part of the apparatus. The nozzles are housed inside the mould 100, more precisely inside the part 120, and their downstream ends are arranged along the contour of the cavity 160 in the three positions of the base component D where overinjection must be performed. In this case, however, the apparatus comprises three injection units 110, 130 and 150 (forming part of the press and/or fixed to the external surface of the mould 100, as in the already mentioned EP-A-1 148 984) and the outlets 112, 132 and 136 of said units are connected to the upstream ends of the nozzles 111, 131 and 151 by means of three separate hot chambers 113, 133 and 153.

It is not necessary to provide further details regarding the various components of the two types of apparatus described above since they consist of details which are well-known to persons skilled in the art both in terms of construction and as regards the operating and control procedures. On the other hand it must be underlined that the presence of the hot chambers between the injection unit or units and the nozzles constitutes a critical aspect of the apparatus, as already discussed above.

It would therefore be desirable and is in fact a first object of the invention to make the injection unit independent of the press so as to eliminate the hot chambers.

Even though systems for controlling the temperatures of the various hot chambers in a precise and independent manner are known, the latter still have in fact certain critical features, in particular:
- the melted synthetic material tends in any case to deteriorate during transfer since it is not possible to heat the injection nozzle directly, with the consequent difficulty (if not impossibility) of obtaining articles of a very high quality; and
- the material which is not used (even though it, per se, is usually recyclable) is relatively abundant owing to the distance between the injection unit and the various nozzles which may be particularly long in the case of a base component very much bigger than the various additional parts.

According to the present invention, the abovementioned object as well as other objects may be achieved by housing inside an overinjection mould one or more injection units, and precisely one unit for each of the additional parts to be overinjected onto the base component. The synthetic materials (which may also be different for the various additional parts) are drawn from external supply tanks or stores and conveyed to the injection unit or units. In other words it may be stated that, as a result of the invention, a mould forms an overinjection apparatus. The invention is defined by the features of claim 1.

In a first embodiment the injection unit or units are in direct communication with a corresponding number of nozzles, which are also housed inside the same mould, and said nozzles are in turn in direct communication with the cavity of the mould inside which the base component is situated, so that the hot chambers are eliminated.

In a second embodiment the injection unit or units communicate directly with the cavity of the mould inside which the base component is situated so that not only the hot chambers but also the nozzles are eliminated.

In order to illustrate better the characteristic features and advantages a description is now provided solely by way of a non-exclusive example with reference to the accompanying drawing in which:
- Figs. 1A and 1B refer to the state of the art and are already described hereinabove;
- Fig. 2 is similar to Fig. 1A and 1B but shows schematically a first apparatus according to the invention (which, as mentioned further above, consists of a mould), also used for overinjecting three additional parts, in a corresponding number of positions spaced from each other, onto a base component;
- Fig. 3 is a cross-sectional view, on a larger scale, of a part of an apparatus (mould) according to Fig. 2;
- Fig. 4 is a cross-sectional view, on a larger scale, similar to Fig. 3, but refers to a variant of an apparatus (mould) according to the invention.

The overinjection apparatus according to the invention, which is shown in Fig. 2, consists of a mould 500 comprising two parts 520 and 540 which are movable relative to each other and define a cavity 560 and three injection units 510, 530 and 550, the latter being housed inside the part 520 of the mould 500 so that their downstream ends are arranged along the contour of the cavity 560 in the three positions of the base component where overinjection must be performed.

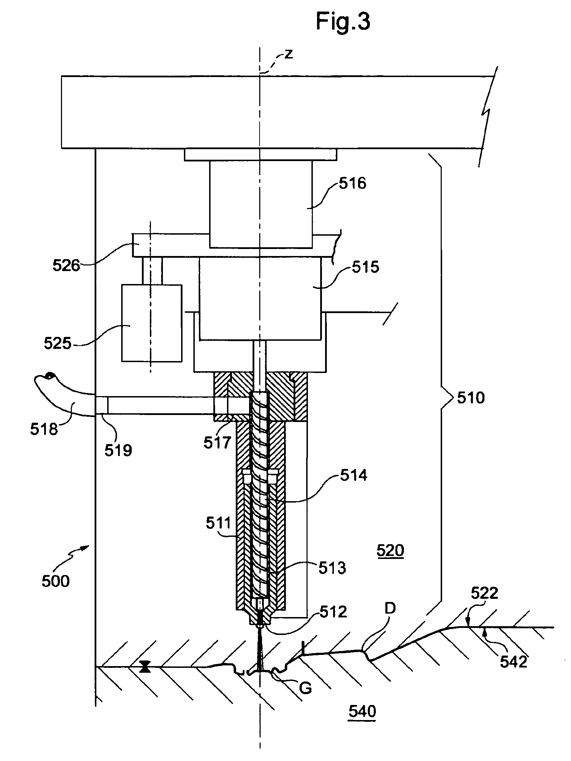

Fig. 3 shows in greater constructional detail the parts 520 and 540 of the mould 500, movable relative to each other, the mould in this example being used to overinject an additional part consisting of a flexible seal G in at least one position of a base component consisting of an inner door D of a motor vehicle, where said seal and said inner door are made from two synthetic materials which are different (though, obviously, compatible) and where the weight of the seal is much less than the inner door, while the linear extension and the cross-section of the seal are such as to require overinjection to take place in a plurality of positions spaced from each other. The description which follows, for the sake of simplicity refers to only one of said positions, i.e. to the sole injection unit indicated by the reference number 510. As can be easily appreciated, the cross-sectional plane of Fig. 3 is at right angles to the lying position of the inner door D which is therefore retained by the facing surfaces 522 and 542 of the respective parts 520 and 540 of the mould 500 which define the cavity 560. Since the mould is shown in the closed configuration and at the end of overinjection, the cavity 560 is not visible in Fig. 3.

The housing of the injection units 510 inside the part 520 of the mould 500 is obtained in the manner which is most convenient in each case, depending on the constructional complexity of the mould, the shape and the dimensions of the cavity, etc. In any case, the use of non-permanent adjustable fixing means is envisaged (which for the sake of simplicity are not shown), such as guides or screws, for fixing the injection unit inside the mould.

The injection unit 510 comprises a cylindrical chamber 511 which extends along an axis Z perpendicular to the theoretical plane of lying position of the inner door D inside the mould 500 and which has at the downstream end a calibrated orifice 512. A conventional rotating injection screw 513 and, in this embodiment of the invention, a needle valve 514 for closing the orifice 512, are mounted inside the chamber 511. The valve 514 is arranged inside the screw 512 and has the axis Z in common with the latter, as well as with the cylindrical chamber 511. In a manner known per se, the screw 513 is made to rotate by an electric or hydraulic motor 515 which is pushed towards the orifice 512 by means of at least one hydraulic or pneumatic cylinder 525 and a plate 526 which acts on the motor 515. The operation of the valve 514 is ensured by another hydraulic or pneumatic cylinder 516 or, alternately, by electric means.

At the top, the cylindrical chamber 511 has a hole 517 connected to one end of a flexible pipe 518 by means of a threaded union 519. The synthetic material (usually in the form of granules) used for forming the seal G is supplied along the pipe 518, for which reason said pipe is connected, at the other end, to a tank or store (not shown) outside the mould 500.

The removal of synthetic material required in each case for the injection unit 510 is ensured by rotation of the screw 513, while the heating necessary for melting said synthetic material is ensured by conventional electric heating elements (for the sake of simplicity not shown) which are incorporated in the wall of the cylindrical chamber 511 between the hole 517 and the calibrated orifice 512, the said heating elements being equipped with cables, actuating and control devices, etc., (also not shown) well-known per se to persons skilled in the art.

The operation of the apparatus described above, i.e. the mould 500, for overinjecting the seal G onto the inner door D is as follows. While the heating elements are energised, with the mould in the closed configuration so that the inner door D is retained between the surfaces 522 and 542 of the parts 520 and 540, the motor 515 is started so that a metered quantity of granules of synthetic material, for example polycarbonate, is supplied into the cylindrical chamber 511 by means of the pipe 518 and melted inside the said chamber 511.

Pushed by the screw 513 and regulated by the position of the valve 514, the melted synthetic material flows directly (i.e. without the use of hot chambers or nozzles) from the injection unit 510, through the calibrated orifice 512, to the cavity 560 of the mould 500 where the seal G must be formed, overcoming the drawbacks which are typical of the state of the art, as already mentioned hereinabove.

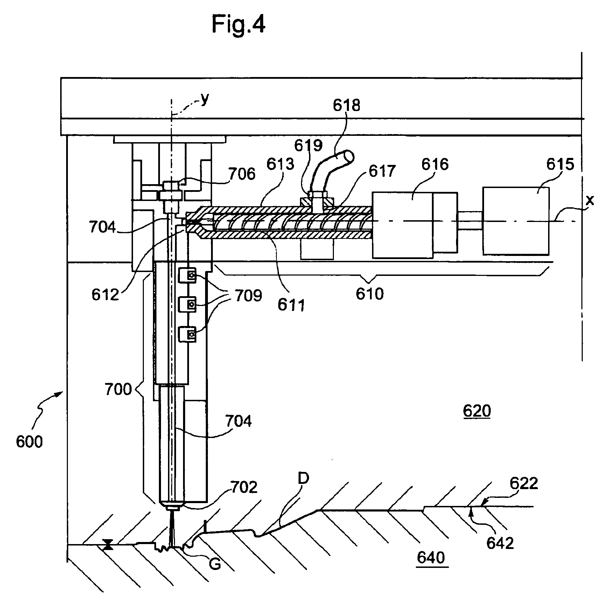

The variant shown in Fig. 4 also envisages that a mould 600 comprising two parts 620 and 640 which are movable relative to each other and define a cavity 660 forms part of the overinjection apparatus, in addition to a press not shown. By way of example it is also envisaged that in this case the additional part to be overinjected into the cavity 660 consists of a flexible seal G and the base component of an inner door D.

In this case, the part 620 of the mould 600 is provided with seats for housing an injection unit 610 and a nozzle 700 which are fixed inside the mould by means of non-permanent, adjustable, fixing means (for the sake of simplicity not shown), such as guides or screws.

The injection unit 610 comprises a cylindrical chamber 611 where, in this embodiment of the invention, a conventional screw 613 is mounted, said screw extending along a first axis X. Operation of the screw 613, in order to perform injection of the synthetic material, is ensured by an equally conventional actuating means 615 (for example, an electric or hydraulic motor). The chamber 611 is also provided with a hole 617 connected to one end of a flexible pipe 618 by means of a threaded union 619. The pipe 618 forms the means for supplying the synthetic material (usually in the form of granules) from which the seal G is made and is therefore connected, at the other end, to a tank or store (not shown) outside the mould. Metered removal of synthetic material required in each case for the injection unit 610 is ensured by a second electric or hydraulic motor 616 which operates the screw 613.

The downstream end of the chamber 601 has a calibrated orifice 612 which communicates directly with the injection nozzle 700 which extends perpendicularly to the screw 613 along a second axis Y which intersects the first axis X and is perpendicular thereto. The heating necessary for melting said synthetic material is ensured by conventional electric heating elements (for the sake of simplicity not shown) which are incorporated in the wall of the cylindrical chamber 611 between the hole 617 and the calibrated orifice 612, the said heating elements being conventionally equipped with cables and well-known control devices (also not shown).

The injection nozzle 700 is of the type known per se and provided with conventional heating elements, only the terminals 709 of which are shown in Fig. 4. In this embodiment of the invention, the calibrated orifice 702 on the downstream end of the nozzle 700 is able to be closed by a needle valve 704. Operation of the valve 704 is performed electrically or ensured by a conventional actuating means (for example a hydraulic or pneumatic cylinder) 706 positioned beyond the point of intersection of the axes X and Y. The auxiliary components of the nozzle (cables, control devices) are not shown in that they are also well-known.

Operation of the variant according to Fig. 4, namely of the mould 600, is not substantially different from operation of the overinjection apparatus, namely the mould 500, which has already been described in relation to Fig. 3 since the only major difference consists in the presence of the nozzle 700 between the injection unit 610 and the cavity 660.

While the mould 600 is in the closed configuration so that the inner door D is retained between the surfaces 622 and 624 of the parts 620 and 640 of the mould 600, the heating elements of the injection unit 610 and the nozzle 700 are energised, together with the actuating means 615 and 616. The synthetic material is thus supplied into the cylindrical chamber 611 along the pipe 618 and melted inside the said chamber, following which it is transferred through the orifice 612 into the nozzle 700 by the screw 613.

The heating elements of the nozzle 700 keep the synthetic material melted and the latter, owing to the opening of the needle valve 704, enters in a metered quantity into the cavity 660 through the calibrated orifice 702, thus forming the seal G on the inner door D.

The main advantages offered by the present invention may thus be summarised:
- the total independence of the injection units from the press since said units are housed inside at least one of the parts which form a mould;
- the means used for fixing the injection units inside the mould are such as to allow not only adjustment of their position but also removal of the units for repair or replacement where necessary;
- the length of the flow paths between the downstream end of these injections units and the cavities of the mould where the article is produced is reduced to zero or at least to a minimum;
- the substantial lack of dead-head ensures both an extremely high surface quality of the article and a minimal amount of waste material.

Although this description has taken into consideration currently preferred embodiments of the present invention, it is understood that it may also be extended and realized industrially in a different way within the scope of the following claims which, in particular, comprise:
- an injection unit without screws and associated actuating means, in the case of particularly small quantities of synthetic material to be overinjected;
- an injection system having a flow which is free instead of regulated by valve means inside the injection unit (in the embodiment shown in Fig. 3) and/or inside the associated nozzle (in the embodiment shown in Fig. 4).

## Claims

1. Injection-moulding system for the production of articles made with one or more synthetic materials in which at least one additional part (G) is overinjected onto a base component (D) inside a cavity .(560; 660) defined between at least two parts (520, 540; 620, 640) of a mould (500; 600) which are movable relative to each other, the said system comprising at least one injection unit (510, 530, 550; 610), wherin said injection unit (510; 610) comprises heating means for melting the synthetic material and at least one screw (513; 613) and means (515, 516, 525; 615, 616) able to rotate and also displace said screw along a chamber (511; 611) which extends along a first axis (X), the said chamber having an orifice (512, 612) **characterized in that** said at least one injection unit (510, 530, 550; 610) is housed inside at least one of said parts (520; 620) of the mould (500; 600) so as to reduce to a minimum the length of the flow path of the liquefied material overinjected between the downstream end (512; 612) of the injection unit and said cavity of the mould.

2. Injection-moulding system according to Claim 1, **characterized in that** said injection unit (510; 610) is fixed inside the mould by means of non-permanent adjustable fixing means, for example guides or screws.

3. Injection-moulding system according to Claim 1, **characterized in that** said orifice is calibrated on its downstream end.

4. Injection-moulding system according to Claim 3, **characterized in that** said injection unit (510, 610) is of the type having a free flow of the melted synthetic material towards the preferably calibrated orifice (512) of the injection unit (510).

5. Injection-moulding system according to Claim 3, **characterized by** a valve (514) for regulating the flow of melted synthetic material which acts on the preferably calibrated orifice (512) of said injection unit (510, 610).

6. Injection-moulding system according to Claim 5, **characterized in that** said regulating valve (514) is provided with electric, hydraulic or pneumatic actuating means.

7. Injection-moulding system according to Claim 3, **characterized in that** said preferably calibrated orifice (612) of the injection unit (510) is in direct communication with said cavity (560) of the mould (500) where said overinjection takes place.

8. Injection-moulding system according to Claim 3, **characterized in that** an injection nozzle (700) is arranged immediately downstream of said preferably calibrated orifice (612) of the injection unit (610), inside the said mould (600), the said nozzle being in direct communication with the cavity (660) of the mould (600) where said overinjection takes place.

9. Injection-moulding system according to Claim 8, **characterized by** a valve (704) for regulating the flow of melted synthetic material which acts on the preferably calibrated orifice (702) of said nozzle (700).

## Patentansprüche

1. Spritzgusssystem zum Herstellen von aus einem oder mehreren Kunststoffen gefertigten Gegenständen, bei welchem wenigstens ein zusätzliches Teil (G) auf einen Basisbestandteil (D) aufgespritzt ist, der sich in einem Hohlraum (560; 660) befindet, der zwischen wenigstens zwei relativ zu einander bewegbaren Teilen (520, 540; 620 640) einer Gussform (500; 600) festgelegt ist, wobei das System wenigstens eine Spritzeinheit (510, 530, 550; 610) umfasst, wobei die Spritzeinheit (510; 610) Heizmittel zum Schmelzen des Kunststoffs und wenigstens eine Schraube (513; 613) umfasst, sowie Mittel (515, 516, 525; 615, 616), die in der Lage sind, sich zu drehen und außerdem die Schraube entlang einer sich entlang einer ersten Achse (X) erstreckenden Kammer (511; 611) zu verlagern, wobei die Kammer eine Öffnung (512; 612) aufweist,
**dadurch gekennzeichnet, dass** in wenigstens einem der Teile (520; 620) der Gussform (500; 600) die wenigstens eine Spritzeinheit (510, 530, 550; 610) derart aufgenommen ist, dass die Länge des Strömungswegs des zwischen dem stromabwärtigen Ende (512; 612) der Spritzeinheit und dem Hohlraum der Gussform aufgespritzten, verflüssigten Materials auf ein Minimum reduziert ist.

2. Spritzgusssystem gemäß Anspruch 1, **dadurch gekennzeichnet, dass** die Spritzeinheit (510; 610) mittels lösbarer, einstellbarer Befestigungsmittel, wie beispielsweise Führungen oder Schrauben, in der Gussform befestigt ist.

3. Spritzgusssystem gemäß Anspruch 1, **dadurch gekennzeichnet, dass** die Öffnung an ihrem stromabwärtigen Ende kalibriert ist.

4. Spritzgusssystem gemäß Anspruch 3, **dadurch gekennzeichnet, dass** die Spritzeinheit (510; 610) von dem Typ ist, der einen freien Strom von geschmolzenem Kunststoff in Richtung der vorzugsweise kalibrierten Öffnung (512) der Spritzeinheit (510) aufweist.

5. Spritzgusssystem gemäß Anspruch 3, **gekennzeichnet durch** ein auf die vorzugsweise kalibrierte Öffnung (512) der Spritzeinheit (510; 610) wirkendes Ventil (514) zum Regeln des Stroms von geschmolzenem Kunststoff.

6. Spritzgusssystem gemäß Anspruch 5, **dadurch gekennzeichnet, dass** das Regelventil (514) mit elektrischen, hydraulischen oder pneumatischen Betätigungsmitteln versehen ist.

7. Spritzgusssystem gemäß Anspruch 3, **dadurch gekennzeichnet, dass** die vorzugsweise kalibrierte Öffnung (512) der Spritzeinheit (510) mit dem Hohlraum (560) der Gussform (500) an der Stelle in direkter Verbindung steht, an welcher das Aufspritzen stattfindet.

8. Spritzgusssystem gemäß Anspruch 3, **dadurch gekennzeichnet, dass** unmittelbar stromabwärts der vorzugsweise kalibrierten Öffnung (612) der Spritzeinheit (610), und zwar in der Gussform (600), eine Spritzdüse (700) angeordnet ist, wobei die Düse mit dem Hohlraum (660) der Gussform (600) an der Stelle in direkter Verbindung steht, an welcher das Aufspritzen stattfindet.

9. Spritzgusssystem gemäß Anspruch 8, **gekennzeichnet durch** ein auf die vorzugsweise kalibrierte Öffnung (702) der Düse (700) wirkendes Ventil (704) zum Regeln des Stroms von geschmolzenem Kunststoff.

## Revendications

1. Système de moulage par injection pour la production d'articles faits d'une ou plusieurs matières synthétiques dans lesquels au moins une partie supplémentaire (G) est surinjectée sur un composant de base (D) à l'intérieur d'une empreinte (560 ; 660) définie entre au moins deux parties (520, 540 ; 620, 640) d'un moule (500 ; 600) qui sont mobiles l'une par rapport à l'autre, ledit système comprenant au moins une unité d'injection (510, 530, 550 ; 610), dans lequel ladite unité d'injection (510 ; 610) comprend des moyens de chauffage pour faire fondre la matière synthétique et au moins une vis (513 ; 613) et des moyens (515, 516, 525 ; 615, 616) aptes à faire tourner et également à déplacer ladite vis le long d'une chambre (511; 611) qui s'étend le long d'un premier axe (X), ladite chambre comportant un orifice (512, 612), **caractérisé en ce que** ladite au moins une unité d'injection (510, 530, 550 ; 610) est logée à l'intérieur d'au moins l'une desdites parties (520; 620) du moule (500; 600) de manière à réduire au minimum la longueur du trajet d'écoulement de la matière fluidifiée surinjectée entre l'extrémité aval (512 ; 612) de l'unité d'injection et ladite empreinte du moule.

2. Système de moulage par injection selon la revendication 1, **caractérisé en ce que** ladite unité d'injection (510 ; 610) est fixée à l'intérieur du moule par des moyens de fixation réglables non permanents, par exemple, des guides ou des vis.

3. Système de moulage par injection selon la revendication 1, **caractérisé en ce que** ledit orifice est calibré sur son extrémité aval.

4. Système de moulage par injection selon la revendication 3, **caractérisé en ce que** ladite unité d'injection (510, 610) est du type comportant un écoulement libre de la matière synthétique en fusion vers l'orifice (512) de préférence calibré de l'unité d'injection (510).

5. Système de moulage par injection selon la revendication 3, **caractérisé par** une vanne (514) pour réguler l'écoulement de la matière synthétique en fusion qui agit sur l'orifice (512) de préférence calibré de l'unité d'injection (510, 610).

6. Système de moulage par injection selon la revendication 5, **caractérisé en ce que** ladite vanne de régulation (514) est équipée de moyens d'actionnement électriques, hydrauliques ou pneumatiques.

7. Système de moulage par injection selon la revendication 3, **caractérisé en ce que** ledit orifice (512) de préférence calibré de l'unité d'injection (510) est en communication directe avec ladite empreinte (560) du moule (500) où a lieu ladite surinjection.

8. Système de moulage par injection selon la revendication 3, **caractérisé en ce qu'**une buse d'injection (700) est placée immédiatement en aval dudit orifice (512) de préférence calibré de l'unité d'injection (610), à l'intérieur dudit moule (600), ladite buse étant en communication directe avec ladite empreinte (660) du moule (600) où a lieu ladite surinjection

9. Système de moulage par injection selon la revendication 8, **caractérisé par** une vanne (704) pour réguler l'écoulement de la matière synthétique en fusion qui agit sur l'orifice (702) de préférence calibré de ladite buse (700).
